(19) Europäisches Patentamt / European Patent Office / Office européen des brevets

(11) **EP 3 181 600 B1**

(12) **EUROPEAN PATENT SPECIFICATION**

(45) Date of publication and mention
of the grant of the patent:
**13.06.2018 Bulletin 2018/24**

(21) Application number: **15831908.7**

(22) Date of filing: **07.08.2015**

(51) Int Cl.:
*C08F 212/08* (2006.01)    *C08F 220/14* (2006.01)
*C08F 222/06* (2006.01)    *C08L 25/14* (2006.01)
*C08L 33/10* (2006.01)

(86) International application number:
**PCT/JP2015/072565**

(87) International publication number:
**WO 2016/024553 (18.02.2016 Gazette 2016/07)**

(54) **COPOLYMER SUITABLE FOR IMPROVING HEAT RESISTANCE OF METHACRYLIC RESIN**

ZUR VERBESSERUNG DER WÄRMEBESTÄNDIGKEIT VON METHACRYLATHARZ GEEIGNETES COPOLYMER

COPOLYMÈRE APPROPRIÉ POUR AMÉLIORER LA RÉSISTANCE À LA CHALEUR D'UNE RÉSINE MÉTHACRYLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.08.2014 JP 2014163760**

(43) Date of publication of application:
**21.06.2017 Bulletin 2017/25**

(73) Proprietor: **Denka Company Limited
Tokyo 103-8338 (JP)**

(72) Inventors:
• **MATSUMOTO, Masanori**
**Chiba 290-8588 (JP)**
• **NOGUCHI, Tetsuo**
**Chiba 290-8588 (JP)**
• **NISHINO, Kohhei**
**Chiba 290-8588 (JP)**
• **SHIMOKOBA, Yuichi**
**Chiba 290-8588 (JP)**
• **KUROKAWA, Yoshinari**
**Chiba 290-8588 (JP)**

(74) Representative: **Gulde & Partner
Patent- und Rechtsanwaltskanzlei mbB
Wallstraße 58/59
10179 Berlin (DE)**

(56) References cited:
EP-A1- 2 881 407          EP-A1- 2 881 770
EP-A1- 2 910 580          WO-A1-2014/021264
WO-A1-2014/021265        WO-A1-2014/065129
WO-A1-2014/119360        JP-A- S55 102 614
US-A- 5 189 100

**Description**

**Technical Field**

The present invention relates to a copolymer suitable for improving the heat resistance of a methacrylic resin, a resin composition comprising the copolymer and the methacrylic resin, and a molded body produced using the resin composition.

**Background Art**

Transparent resins are used for various applications such as parts of home appliances, food containers, and miscellaneous goods. Nowadays, the applications further include: elements for thin liquid crystal displays, which are used as an alternative for CRT television monitors; and optical components of electro-luminescence devices (e.g., a phase difference film, a polarizer protective film, an antireflection film, a diffusion plate, a light-guiding plate). In view of their light-weight property, production efficiency, and cost, the transparent resins are thus frequently used in practice.

Methacrylic resins are widely used for optical purposes. The methacrylic resins have better optical properties such as transparency. However, they have some problems such as low heat resistance. Accordingly, use of the methacrylic resins is limited.

Examples of a known resin having increased heat resistance include a copolymer resin produced by copolymerizing methyl methacrylate, maleic anhydride, and styrene (see, for example, JP S57-153008 A).

In addition, the examples include a copolymer resin produced by copolymerizing at least one monomer selected from an aromatic vinyl monomer, a (meth)acrylic acid ester monomer, an unsaturated dicarboxylic acid imide derivative, and an unsaturated dicarboxylic anhydride monomer (see, for example, WO 2009/031544 A1).

Also, the examples further include a copolymer for improving the heat resistance of a methacrylic resin, characterized in that the heat resistance is improved by combining the methacrylic resin with a predetermined amount of the copolymer while not deteriorating the superior transparency of the methacrylic resin; and use of the copolymer enables a molded product with an excellent appearance to be obtained (see, for example, WO 2014/021264 A1).

EP 2 881 407 A1, EP 2881 770 A1 and EP 2 910 580 A1 all disclose copolymers comprising an aromatic vinyl monomer unit, a (meth)acrylic acid ester monomer unit, and below 20 mass% of an unsaturated dicarboxylic acid anhydride monomer unit. The copolymer of EP 2 881 407 A1 is used for improving heat resistance of a methacrylic resin, the copolymer of EP 2881 770 A1 is used as optical compensation film, and of EP 2 910 580 A1 is used for improving heat resistance of aromatic vinyl-vinyl cyanide based resins.

**SUMMARY OF INVENTION**

**Technical Problem**

The resin described in JP S57-153008 A has better heat resistance than methacrylic resins. The thermostability thereof, however, is poor. Accordingly, what is called molding defects such as silver streaks, gas burning, coloring, and foaming is likely to occur during molding. Because of this, use therefor is limited.

The resin described in WO 2009/031544 A1 also has better heat resistance. The molding processability thereof, however, is poor. Accordingly, molding defects such as flow marks and coloring are likely to occur. Because of this, use therefor is limited.

WO 2014/021264 A1 describes an innovative resin and provides a copolymer for improving the heat resistance of a methacrylic resin, characterized in that the heat resistance is improved by combining the methacrylic resin with a predetermined amount of the copolymer while not deteriorating the superior transparency of the methacrylic resin; and use of the copolymer enables a molded product with an excellent appearance to be obtained. However, there has still been such a demand that the heat resistance should be improved further when the predetermined amount of the copolymer is combined with the methacrylic resin; or that the intended heat resistance should be achieved while keeping the excellent surface hardness and scratch resistance of the methacrylic resin, and so on.

The present invention has been made in view of such situations. Provided is a copolymer that has a heat resistance improvement effect, with respect to a methacrylic resin, superior to that of the prior art, while not deteriorating compatibility with the methacrylic resin.

Solution to Problem

The present invention has the following items.

(1) A copolymer comprising 45 to 75% by mass of an aromatic vinyl monomer unit, 5 to 35% by mass of a (meth)acrylic acid ester monomer unit, and 20 to 25% by mass of an unsaturated dicarboxylic anhydride monomer unit, wherein a haze measured along an optical path length of 10 mm through a 12% by mass chloroform solution of the copolymer in accordance with JIS K-7136 is 5% or less.

(2) The copolymer according to item 1, wherein the haze measured along an optical path length of 10 mm through a 12% by mass chloroform solution of the copolymer is 2% or less.

(3) The copolymer according to item 1 or 2, wherein a weight-average molecular weight (Mw) is 100,000 to 200,000.

(4) A resin composition comprising the copolymer according to any one of items 1 to 3 and a methacrylic resin.

(5) A resin composition comprising 5 to 50% by mass of the copolymer according to any one of items 1 to 3 and 50 to 95% by mass of a methacrylic resin.

(6) A molded body comprising the resin composition according to item 4 or 5.

(7) The molded body according to item 6, wherein the molded body is a film.

(8) The film according to item 7, wherein the film is used for a polarizer protective film.

(9) The molded body according to item 6, which is a sheet.

(10) The sheet according to item 9, wherein the sheet is used for a transparent, scratch-resistant plate.

(11) A transparent, scratch-resistant plate comprising a sheet, wherein the sheet is a laminated sheet of the resin composition according to item 4 or 5 and a polycarbonate resin.

**Advantageous Effects of Invention**

The present invention can provide a copolymer that has a heat resistance improvement effect, with respect to a methacrylic resin, superior to that of the prior art, while not deteriorating compatibility with the methacrylic resin.

**Description of Embodiments**

<Descriptions of Terms>

As used herein, the phrase "A to B" means "A or more and B or less".

Hereinafter, embodiments of the present invention will be described in detail.

Examples of the aromatic vinyl monomer unit include units derived from styrene-based monomers (e.g., styrene, o-methylstyrene, m-methylstyrene, p-methylstyrene, 2,4-dimethylstyrene, ethylstyrene, p-tert-butylstyrene, $\alpha$-methylstyrene, $\alpha$-methyl-p-methylstyrene). Among them, preferred is a styrene unit. The aromatic vinyl monomer units may be used singly or in combination.

Examples of the (meth)acrylic acid ester monomer unit include units derived from methacrylic acid ester monomers (e.g., methyl methacrylate, ethyl methacrylate, n-butyl methacrylate, 2-ethylhexyl methacrylate, dicyclopentanyl methacrylate, isobornyl methacrylate) and acrylic acid ester monomers (e.g., methyl acrylate, ethyl acrylate, n-butyl acrylate, 2-methylhexyl acrylate, 2-ethylhexyl acrylate, decyl acrylate). Among them, preferred is a methyl methacrylate unit. The (meth)acrylic acid ester monomer units may be used singly or in combination.

Examples of the unsaturated dicarboxylic anhydride monomer unit include units derived from anhydride monomers (e.g., maleic anhydride, itaconic anhydride, citraconic anhydride, aconitic anhydride). Among them, preferred is a maleic anhydride unit. The unsaturated dicarboxylic anhydride monomer units may be used singly or in combination.

The copolymer according to an embodiment of the present invention comprises 45 to 75% by mass of an aromatic vinyl monomer unit, 5 to 35% by mass of a (meth)acrylic acid ester-based monomer unit, and 20 to 25% by mass of an unsaturated dicarboxylic anhydride monomer unit, and preferably comprises 50 to 73% by mass of an aromatic vinyl monomer unit, 7 to 30% by mass of a (meth)acrylic acid ester monomer unit, and 20 to 23% by mass of an unsaturated dicarboxylic anhydride monomer unit. The content of each unit of the copolymer is represented in an analysis value determined by a predetermined protocol. In fact, the content of each unit has a distribution (hereinafter, this distribution is referred to as a composition distribution). The composition distribution is averaged.

The content of the aromatic vinyl monomer unit may be 45% by mass or more. In this case, the thermostability is improved. Accordingly, a resin composition produced by combining the copolymer with a methacrylic resin is molded to give a molded product with a good appearance. When the content is 50% by mass or more, the thermostability is improved further. Accordingly, a resin composition produced by combining the copolymer with a methacrylic resin is molded to give a molded product with a much better appearance. This is preferable. The content of the aromatic vinyl monomer unit may be 75% by mass or less. In this case, the heat resistance improvement effect with respect to a methacrylic resin is better. When the content is 73% by mass or less, the heat resistance improvement effect with respect to a methacrylic resin is much better.

The content of the (meth)acrylic acid ester monomer unit may be 5% by mass or more. In this case, the compatibility with a methacrylic resin is improved. Accordingly, a resin composition produced by combining the copolymer with a methacrylic resin is more transparent. When the content is 7% by mass or more, the compatibility with a methacrylic resin is improved further. Accordingly, a resin composition produced by combining the copolymer with the methacrylic resin is much more transparent. This is preferable. The content of the (meth)acrylic acid ester monomer unit may be 35% by mass or less. In this case, the thermostability is improved. Accordingly, a resin composition produced by combining the copolymer with a methacrylic resin is molded to give a molded product with a good appearance. When the content is 30% by mass or less, the thermostability is improved further. Accordingly, a resin composition produced by combining the copolymer with a methacrylic resin is molded to give a molded product with a much better appearance. This is preferable.

The content of the unsaturated dicarboxylic anhydride monomer unit may exceed 20% by mass. In this range, it is very difficult to keep the compatibility with a methacrylic resin. If the compatibility with a methacrylic resin can be kept, the heat resistance improvement effect with respect to the methacrylic resin is good as well as a resin composition produced by combining the copolymer with a methacrylic resin is more transparent. The content of the unsaturated dicarboxylic anhydride monomer unit may be 25% by mass or less. In this case, the compatibility with a methacrylic resin can be maintained. When the content is 23% by mass or less, it is easy to obtain the copolymer in which the compatibility with a methacrylic resin is maintained. This is preferable. In addition, the content of the unsaturated dicarboxylic anhydride monomer unit may be 20% by mass or more. In this case, an effect of imparting heat resistance to a methacrylic resin is enhanced. When the content is 21% by mass or more, the effect of imparting heat resistance to a methacrylic resin is enhanced further.

Even if the content of the unsaturated dicarboxylic anhydride monomer unit exceeds 20% by mass, the compatibility with a methacrylic resin should be maintained. To achieve this, the copolymer has to have a small composition distribution. It is particularly recommended that there exists a very few compositions containing a large amount of the unsaturated dicarboxylic anhydride monomer unit that is incompatible with the methacrylic resin. The present inventors found out that when a 12% by mass chloroform solution of the copolymer was prepared, the component that was incompatible with the methacrylic resin was precipitated. This helps establish criteria used to determine the compatibility with a methacrylic resin by measuring a haze along an optical path length of 10 mm through a 12% by mass chloroform solution of the copolymer. That is, if the haze as measured in accordance with JIS K-7136 is 5% or less, the copolymer has a better compatibility with a methacrylic resin. Thus, a resin composition produced by combining the copolymer with a methacrylic resin is more transparent. If the haze is 2% or less, the copolymer has a much better compatibility with a methacrylic resin. Thus, a resin composition produced by combining the copolymer with a methacrylic resin is still more transparent. Note that the copolymer solution is prepared at 12% by mass in chloroform; a quartz cell with an optical path length of 10 mm is filled with this solution and is used for measurement; and a haze is measured using a haze meter (Haze Guard II, manufactured by Toyo Seiki Seisaku-Sho, Ltd.) in accordance with JIS K-7136 to give a measured value. In addition, the "12% by mass chloroform solution of the copolymer" means a solution produced by dissolving 12 parts by mass of the copolymer into 88 parts by mass of chloroform.

The copolymer of an embodiment of the present invention may comprise a copolymerizable vinyl monomer unit other than the aromatic vinyl monomer unit, the (meth)acrylic acid ester monomer unit, and the unsaturated dicarboxylic anhydride monomer unit as long as the effects of the present invention are not inhibited. Preferably, the content of the copolymerizable vinyl monomer unit is 5% by mass or less. Examples of the copolymerizable vinyl monomer unit include units derived from monomers (e.g., vinyl cyanide monomers (e.g., acrylonitrile, methacrylonitrile), vinyl carboxylate monomers (e.g., acrylate, methacrylate), N-alkyl maleimide monomers (e.g., N-methyl maleimide, N-ethyl maleimide, N-butyl maleimide, N-cyclohexyl maleimide), and N-aryl maleimide monomers (e.g., N-phenyl maleimide, N-methyl phenyl maleimide, N-chlorophenyl maleimide)). The copolymerizable vinyl monomer units may be used in combination.

The copolymer of an embodiment of the present invention has an weight-average molecular weight (Mw) of preferably from 100,000 to 200,000 and more preferably from 120,000 to 180,000. When the weight-average molecular weight (Mw) is too large, a resin composition produced by combining the copolymer with a methacrylic resin may have poor moldability and a molded product may also have a poor appearance. When the weight-average molecular weight (Mw) is too small, the moldability may be poor and a molded product may have less strength. Note that the weight-average molecular weight (Mw) is determined by gel permeation chromatography (GPC) in terms of polystyrene and is a measured value obtained under the following measurement conditions:

Device name: SYSTEM-21 Shodex (manufactured by Showa Denko K.K.);
Column: three serially-connected PL gel MIXED-B columns;
Temperature: 40°C;
Detection: differential refractometer;
Solvent: tetrahydrofuran;
Concentration: 2% by mass; and
Standard curve: plotted using a polystyrene (PS) standard (manufactured by PL, Inc.).

The following describes a process for producing a copolymer according to the present invention.

Examples of the polymerization procedure include, but are not particularly limited to, known production processes such as a solution polymerization and a bulk polymerization. The solution polymerization is more preferable. Since a by-product hardly occurs and there is little harmful effect, a solvent used in the solution polymerization is preferably non-polymerizable. Examples of the kind of the solvent include, but are not particularly limited to, ketone compounds (e.g., acetone, methyl ethyl ketone, methyl isobutyl ketone, acetophenone), ether compounds (e.g., tetrahydrofuran, 1,4-dioxane), and aromatic hydrocarbons (e.g., toluene, ethyl benzene, xylene, chloro benzene). In view of the good solubility of the monomer and/or the copolymer and an easy-to-recover solvent, preferred are methyl ethyl ketone and methyl isobutyl ketone. The additive amount of the solvent is preferably from 10 to 100 parts by mass per 100 parts by mass of the resulting copolymer and more preferably from 30 to 80 parts by mass. The additive amount of 10 parts by mass or more is preferable in order to controll the reaction rate and the viscosity of the polymerization solution. The additive amount of 100 parts by mass or less is preferable so as to obtain a desired weight-average molecular weight (Mw).

As the polymerization process, any of a batch polymerization process, a semibatch polymerization process, and a continuous polymerization process may be adopted. However, the batch polymerization process is preferable so as to achieve a desired range of the molecular weight and transparency.

The polymerization process is not particularly limited. Since the process should be simple and allow good productivity, preferred is a radical polymerization process. Examples of a polymerization initiator include, but are not particularly limited to, known organic peroxide compounds (e.g., dibenzoyl peroxide, t-butyl peroxy benzoate, 1, 1-bis(t-butylperoxy)-2-methylcyclohexane, t-butylperoxy isopropyl monocarbonate, t-butylperoxy-2-ethyl hexanoate, t-butylperoxy acetate, dicumyl peroxide, ethyl-3,3-di-(t-butylperoxy)butyrate) and known azo compounds (e.g., azobis isobutyronitrile, azobis cyclohexanecarbonitrile, azobis methylpropionitrile, azobis methylbutyronitrile). These polymerization initiators may be used in combination. Among them, preferred is an organic peroxide characterized in that the temperature at which a half of the peroxide is decomposed in 10 hour is from 70 to 110°C.

The copolymer according to an embodiment of the present invention should be polymerized such that the haze measured along an optical path length of 10 mm through a 12% by mass chloroform solution of the copolymer in accordance with JIS K-7136 is 5% or less. If the copolymer satisfies the above conditions, the polymerization procedure has no particular limitation. However, the polymerization should be controlled so as to give a narrow composition distribution. It is particularly recommended that there exists a very few compositions containing a large amount of the unsaturated dicarboxylic anhydride monomer unit that is incompatible with the methacrylic resin. Aromatic vinyl monomers can be strongly alternatingly copolymerized with unsaturated dicarboxylic anhydride monomers. Accordingly, it is preferable that in the process, an unsaturated dicarboxylic anhydride monomer is continuously added so as to be fit for the rate of polymerization between an aromatic vinyl monomer and a (meth)acrylic acid ester monomer; and that the flow rate of the addition should be appropriately adjusted so as to be fit for the rate of polymerization. The rate of polymerization may be controlled while the polymerization temperature, the polymerization time, and the additive amount of the polymerization initiator are appropriately adjusted. This is preferable because the composition distribution of the copolymer is made more uniform.

Further, the copolymer may have a weight-average molecular weight (Mw) of preferably from 100,000 to 200,000. In order to obtain such a copolymer, it is possible to further adjust the additive amounts of the solvent and a chain transfer agent, in addition to the polymerization temperature, the polymerization time, and the additive amount of the polymerization initiator. Examples of the chain transfer agent that can be used include, but are not particularly limited to, known chain transfer agents (e.g., n-dodecylmercaptan, t-dodecylmercaptan, 2,4-diphenyl-4-methyl-1-pentene).

After completion of the polymerization, the following additives may be added, if necessary, to the polymerization solution, including thermostabilizers (e.g., a hindered phenol compound, a lactone compound, a phosphorus compound, a sulfur compound), photostabilizers (e.g., a hindered amine compound, a benzo triazol compound), and others (e.g., a lubricant, a plasticizer, a coloring agent, an antistatic agent, mineral oil). Preferably, the additive amount is less than 0.2 parts by mass per 100 parts by mass of the total of the monomer units. These additives may be used singly or in combination.

Examples of a method for collecting the copolymer of the present invention from the polymerization solution include, but are not particularly limited to, known devolatilization technologies. Examples include a method in which the polymerization solution is continuously fed using a gear pump to a biaxial devolatilization extruder and the polymerization solvent and/or unreacted monomers are subjected to devolatilization treatment. Note that devolatized components including the polymerization solvent and unreacted monomers are condensed and collected using, for example, a condenser and the resulting condensate is purified through a distillation tower. This enables the polymerization solvent to be recycled.

The copolymer as so obtained according to the present invention can be used as an agent for improving the heat resistance of a methacrylic resin. Examples of a method for kneading and mixing the copolymer of the present invention with a methacrylic resin to produce a resin composition include, but are not particularly limited to, known melt-kneading technologies. Examples of an available melt-kneading device include screw extruders (e.g., a single screw extruder, an engagement-type co-rotating or counter-rotating twin screw extruder, no or incomplete engagement-type twin screw extruder), a Banbury-type mixer, a co-kneader, and a mixing roll.

According to the present invention, 5 to 50% by mass of the copolymer and 50 to 95% by mass of a methacrylic resin is preferably combined to give a resin composition having a good balance of transparency, color, heat resistance, impact resistance, moldability, and scratch-resistance. More preferably, 10 to 40% by mass of the copolymer and 60 to 90% by mass of the methacrylic resin are combined.

Examples of the methacrylic resin that can be used include commercially available common ones.

To the resin composition may be added a stabilizer, plasticizer, lubricant, antioxidant, UV absorber, photostabilizer, coloring agent, etc. as long as the additive does not impair the effects of the present invention.

The resin composition comprising the copolymer of the present invention and a methacrylic resin has improved heat resistance of subject without deteriorating the excellent transparency of the methacrylic resin. A molded body produced using the resin composition can be widely used for applications that should be resistant to heat. Examples of the applications include in-vehicle parts, home appliance components, and optical components. Examples of the optical components that can be particularly suited include optical films (e.g., a polarizer protective film, a phase difference film, an antireflection film).

When used as a polarizer protective film, the resin composition should have small optical anisotropy. Its in-plane phase difference (Re) as calculated using the following (Equation 1) is 20 nm or less, preferably 10 nm or less, and more preferably 5 nm or less. Its thickness-wise phase difference (Rth) as calculated using the following (Equation 2) is 50 nm or less, preferably 20 nm or less, and more preferably 5 nm or less. When the in-plane phase difference (Re) may be 20 nm or less and the thickness-wise phase difference may be 50 nm or less, use of the polarizer protective film for a polarizing plate of a liquid crystal display does not cause any defects such as a decrease in the contrast of the liquid crystal display. This is thus preferable.

$$Re = (nx - ny) \times d \cdots (\text{Equation } 1)$$

$$Rth = [(nx + ny) / 2 - nz] \times d \cdots (\text{Equation } 2)$$

Note that in the above equations, the nx, ny, and nz each represent a refractive index with respect to the respective directions while the X axis represents a direction in which the in-plane refractive index is maximum, the Y axis represents a direction perpendicular to the X axis, and the Z axis represents the thickness direction of the film. The d represents the thickness of the film.

A method for manufacturing a polarizer protective film has no particular limitation. It is possible to use known molding processes such as a process for molding a film by melt extrusion and a process for molding a film by solution casting. Examples of a process in which optical anisotropy is made smaller include a process using an elastic, flexible roll. Any of the molding processes may be used as long as the optical anisotropy can be made smaller in the molding process. Meanwhile, an unstretched film having small optical anisotropy may be used, as it is, as a polarizer protective film. In order to enhance the strength of the film, however, a film stretched to the extent to which the optical anisotropy is permitted may also be used as the polarizer protective film.

Additional examples of the process in which optical anisotropy is made smaller include: a process for blending the resin composition with a polymer having a positive intrinsic birefringence index (e.g., polycarbonate, polyethylene terephthalate, polyphenylene ether); and a process in which needle-like inorganic crystal microparticles are added. Any of the processes may be used as long as the optical anisotropy can be made smaller.

Transparent and scratch-resistant glass may be used for touch panel members of displays, etc.. In view of weight reduction, molding processability, and anti-crack property, however, the glass should be replaced by a light-weight, easy-to-produce, safe, transparent resin. Examples of the candidate transparent resin include a methacrylic resin and a polycarbonate resin. The methacrylic resin is excellent in transparency, surface scratch resistance, and light resistance, but the heat resistance, moisture absorption, and strength thereof remain to be addressed. By contrast, the polycarbonate resin is excellent in transparency, heat resistance, low moisture absorption, and strength, but the surface scratch resistance and/or light resistance thereof remain to be addressed. Examples of the capabilities necessary as a glass alternative include transparency, surface scratch resistance, light resistance, and strength. In view of the capabilities, used is a sheet or film in which a transparent, surface scratch-resistant, light-resistant methacrylic resin, for example, is stacked on a surface layer of a transparent, low hygroscopic, high-strength polycarbonate resin. However, this laminated sheet or film has defects (e.g., warping caused by deformation due to moisture absorption of a methacrylic resin; warping due to a difference in temperature resistance between a polycarbonate resin with superior heat resistance and a methacrylic resin with less heat resistance than the polycarbonate resin).

Use of the resin composition comprising the copolymer of the present invention and a methacrylic resin can resolve the defects (e.g., the warping caused by deformation due to moisture absorption, the warping due to a difference in temperature resistance) without impairing the transparency and the surface scratch resistance of the methacrylic resin. A molded body produced using the resin composition can be suited as a sheet for a transparent, scratch-resistant plate.

When used as a sheet for a transparent, scratch-resistant plate, the transparent, surface scratch-resistant resin composition comprising the copolymer of the present invention and a methacrylic resin may be stacked on a surface layer of a transparent, high-strength polycarbonate resin.

The resin composition layer may be layered on at least one surface of the polycarbonate resin layer to give a sheet for a transparent, scratch-resistant plate. Examples include; a two-layer laminate in which the resin composition layer is layered on one of the surfaces of the polycarbonate resin layer; and a three-layer laminate in which the resin composition layer is layered on both the surfaces of the polycarbonate resin layer.

A layer of a resin composition comprising the copolymer of the present invention and a methacrylic resin may be layered on at least one surface of the polycarbonate resin layer to produce a sheet for a transparent, scratch-resistant plate. This process has no particular limitation, and any of known melt co-extrusion technologies may be used. Examples of the preferable melt co-extrusion include feed block-type extrusion and extrusion using multiple dies.

For the sheet for a transparent, scratch-resistant plate, it is preferable to use a hard coating agent and/or an antistatic agent to the extent to which the effects of the present invention are not impaired.

Examples of the polycarbonate resin that can be used include commercially available common ones.

The polycarbonate resin layer may contain a stabilizer, plasticizer, lubricant, antioxidant, UV absorber, photostabilizer, coloring agent, etc. as long as the additive does not impair the effects of the present invention.

**Examples**

<Production Example of Copolymer (A-1)>

Prepared beforehand were: a 25% maleic anhydride solution in which a maleic anhydride was dissolved at a concentration of 25% by mass into methyl isobutyl ketone; and a 2% t-butylperoxy-2-ethyl hexanoate solution in which t-butylperoxy-2-ethyl hexanoate was diluted at 2% by mass into methyl isobutyl ketone. Those solutions were used for polymerization.

First, to a 50-L autoclave equipped with a mixer were added 1.6 kg of the 25% maleic anhydride solution, 12 kg of styrene, 4 kg of methyl methacrylate, and 10 g of t-dodecylmercaptan. Next, the gas phase was replaced with nitrogen gas. Then, the temperature of the mixture under stirring was increased to 94°C over 40 min. After the temperature had been raised, the temperature was maintained at 94°C while the 25% maleic anhydride solution and the 2% t-butylperoxy-2-ethyl hexanoate solution were each continuously added. The 25% maleic anhydride solution was added such that the rate of addition was changed step-wise at 1.8 kg/h from the start of addition to 4 h, at 1.44 kg/h from 4 h to 7 h, at 0.72 kg/h from 7 h to 10 h, and at 0.24 kg/h from 10 h to 13 h. The total of 14.4 kg was added. The 2% t-butylperoxy-2-ethyl hexanoate solution was added such that the rate of addition was changed step-wise at 0.12 kg/h from the start of addition to 7 h and at 0.19 kg/h from 7 h to 13 h. The total of 1.98 kg was added. The polymerization temperature was kept at 94°C from the start of addition to 7 h, was then increased to 118°C over 6 h at a programming rate of 4°C/h, and was further kept at 118°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (A-1). The composition of the resulting copolymer (A-1) was analyzed by C-13 NMR spectroscopy. Further, a GPC apparatus was used to measure the molecular weight thereof. In addition, the resulting copolymer (A-1) was dissolved in chloroform to prepare a 12% by mass chloroform solution of the copolymer. A quartz cell with a optical path length of 10 mm was filled with the solution and was used for measurement. Then, the haze along an optical path length of 10mm through the 12% by mass chloroform solution is measured using a haze meter (Haze Guard II, manufactured by Toyo Seiki Seisaku-Sho, Ltd.) in accordance with JIS K-7136. An injection molding machine (IS-50EPN, manufactured by TOSHIBA MACHINE CO.,LTD) was used to perform injection molding under molding conditions at a cylinder temperature of 230°C and a die temperature of 40°C to give a mirror surface plate with a length of 90 mm, a width of 55 mm, and a thickness of 2 mm. After that, a haze meter (NDH-1001DP model, manufactured by NIPPON DENSHOKU INDUSTRIES Co., LTD.) was used to measure the total light transmittance of the mirror surface plate with a thickness of 2 mm in accordance with ASTM D1003. Table 1 shows the results of analyzing the composition of the copolymer (A-1), the results of determining the molecular weight, the results of measuring the haze of the 12% by mass chloroform solution, and the results of measuring the total light transmittance of the mirror surface plate with a thickness of 2 mm.

<Production Example of Copolymer (A-2)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 1.72 kg of the 25% maleic anhydride solution, 14.2 kg of styrene, 1.5 kg of methyl methacrylate, and 10 g of t-dodecylmercaptan. Next, the gas phase was replaced with nitrogen gas. Then, the temperature of the mixture under stirring was increased to 98°C over 40 min. After the temperature had been raised, the temperature was maintained at 98°C while the 25% maleic anhydride solution and the 2% t-butylperoxy-2-ethyl hexanoate solution were each continuously added. The 25% maleic anhydride solution was added such that the rate of addition was changed step-wise at 1.94 kg/h from the start of addition to 4 h, at 1.5 kg/h from 4 h to 7 h, at 0.72kg/h from 7 h to 10 h, and at 0.31 kg/h from 10 h to 13 h. The total of 15.35 kg was added. The 2% t-butylperoxy-2-ethyl hexanoate solution was added such that the rate of addition was changed step-wise at 0.18 kg/h from the start of addition to 7 h and at 0.29 kg/h from 7 h to 13 h. The total of 3 kg was added. The polymerization temperature was kept at 98°C from the start of addition to 7 h, was then increased to 116°C over 6 h at a programming rate of 3°C/h, and was further kept at 116°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (A-2). The resulting copolymer (A-2) was used to determine, like the case of A-1, the composition, molecular weight, haze of the 12% by mass chloroform solution, and total light transmittance of the mirror surface plate with a thickness of 2 mm. Table 1 shows the measured results.

<Production Example of Copolymer (A-3)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 1.8 kg of the 25% maleic anhydride solution, 12 kg of styrene, 3.5 kg of methyl methacrylate, and 10 g of t-dodecylmercaptan. Next, the gas phase was replaced with nitrogen gas. Then, the temperature of the mixture under stirring was increased to 92°C over 40 min. After the temperature had been raised, the temperature was maintained at 92°C while the 25% maleic anhydride solution and the 2% t-butylperoxy-2-ethyl hexanoate solution were each continuously added. The 25% maleic anhydride solution was added such that the rate of addition was changed step-wise at 2.025 kg/h from the start of addition to 4 h, at 1.62 kg/h from 4 h to 7 h, at 0.81 kg/h from 7 h to 10 h, and at 0.27 kg/h from 10 h to 13 h. The total of 16.2 kg was added. The 2% t-butylperoxy-2-ethyl hexanoate solution was added such that the rate of addition was changed step-wise at 0.12 kg/h from the start of addition to 7 h and at 0.19 kg/h from 7 h to 13 h. The total of 1.98 kg was added. The polymerization temperature was kept at 92°C from the start of addition to 7 h, was then increased to 116°C over 6 h at a programming rate of 4°C/h, and was further kept at 116°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (A-3). The resulting copolymer (A-3) was used to determine, like the case of A-1, the composition, molecular weight, haze of the 12% by mass chloroform solution, and total light transmittance of the mirror surface plate with a thickness of 2 mm. Table 1 shows the measured results.

<Production Example of Copolymer (A-4)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 1.64 kg of the 25% maleic anhydride solution, 9.8 kg of styrene, 6.1 kg of methyl methacrylate, and 10 g of t-dodecylmercaptan. Next, the gas phase was replaced with nitrogen gas. Then, the temperature of the mixture under stirring was increased to 94°C over 40 min. After the temperature had been raised, the temperature was maintained at 94°C while the 25% maleic anhydride solution and the 2% t-butylperoxy-2-ethyl hexanoate solution were each continuously added. The 25% maleic anhydride solution was added such that the rate of addition was changed step-wise at 2.21 kg/h from the start of addition to 4 h, at 1.13 kg/h from 4 h to 7 h, at 0.55 kg/h from 7 h to 11 h, and at 0.15 kg/h from 11 h to 13 h. The total of 14.73 kg was added. The 2% t-butylperoxy-2-ethyl hexanoate solution was added such that the rate of addition was changed step-wise at 0.06 kg/h from the start of addition to 7 h and at 0.1 kg/h from 7 h to 13 h. The total of 1.02 kg was added. The polymerization temperature was kept at 94°C from the start of addition to 7 h, was then increased to 118°C over 6 h at a programming rate of 4°C/h, and was further kept at 118°C for 1 h to complete the polymerization.

The polymerization solution was continuously fed using a gear pump to a twin-screw devolatilization extruder.

Next, methyl isobutyl ketone and a tiny amount of unreacted monomers, etc., were subjected to devolatilization treatment. Then, the remaining material was extruded and cut to give a copolymer pellet (A-4). The resulting copolymer (A-4) was used to determine, like the case of A-1, the composition, molecular weight, haze of the 12% by mass chloroform solution, and total light transmittance of the mirror surface plate with a thickness of 2 mm. Table 1 shows the measured results.

<Production Example of Copolymer (A-5)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 1.92 kg of the 25% maleic anhydride solution, 12.2 kg of styrene, 3.0 kg of methyl methacrylate, and 10 g of t-dodecylmercaptan. Next, the gas phase was replaced with nitrogen gas. Then, the temperature of the mixture under stirring was increased to 92°C over 40 min. After the temperature had been raised, the temperature was maintained at 92°C while the 25% maleic anhydride solution and the 2% t-butylperoxy-2-ethyl hexanoate solution were each continuously added. The 25% maleic anhydride solution was added such that the rate of addition was changed step-wise at 2.25 kg/h from the start of addition to 4 h, at 1.73 kg/h from 4 h to 7 h, at 0.86 kg/h from 7 h to 10 h, and at 0.17 kg/h from 10 h to 13 h. The total of 17.28 kg was added. The 2% t-butylperoxy-2-ethyl hexanoate solution was added such that the rate of addition was changed step-wise at 0.15 kg/h from the start of addition to 7 h and at 0.24 kg/h from 7 h to 13 h. The total of 2.49 kg was added. The polymerization temperature was kept at 92°C from the start of addition to 7 h, was then increased to 116°C over 6 h at a programming rate of 4°C/h, and was further kept at 116°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (A-5). The resulting copolymer (A-5) was used to determine, like the case of A-1, the composition, molecular weight, haze of the 12% by mass chloroform solution, and total light transmittance of the mirror surface plate with a thickness of 2 mm. Table 1 shows the measured results.

<Production Example of Copolymer (A-6)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 1.68 kg of the 25% maleic anhydride solution, 14.8 kg of styrene, 1 kg of methyl methacrylate, and 10 g of t-dodecylmercaptan. Next, the gas phase was replaced with nitrogen gas. Then, the temperature of the mixture under stirring was increased to 97°C over 40 min. After the temperature had been raised, the temperature was maintained at 97°C while the 25% maleic anhydride solution and the 2% t-butylperoxy-2-ethyl hexanoate solution were each continuously added. The 25% maleic anhydride solution was added such that the rate of addition was changed step-wise at 1.61 kg/h from the start of addition to 6 h, at 0.91 kg/h from 6 h to 9 h, at 0.66 kg/h from 9 h to 12 h, and at 0.25 kg/h from 12 h to 15 h. The total of 15.12 kg was added. The 2% t-butylperoxy-2-ethyl hexanoate solution was added such that the rate of addition was changed step-wise at 0.13 kg/h from the start of addition to 9 h and at 0.3 kg/h from 9 h to 15 h. The total of 2.97 kg was added. The polymerization temperature was kept at 97°C from the start of addition to 9 h, was then increased to 118°C over 6 h at a programming rate of 3.5°C/h, and was further kept at 118°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (A-6). The resulting copolymer (A-6) was used to determine, like the case of A-1, the composition, molecular weight, haze of the 12% by mass chloroform solution, and total light transmittance of the mirror surface plate with a thickness of 2 mm. Table 1 shows the measured results.

<Production Example of Copolymer (A-7)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 1.6 kg of the 25% maleic anhydride solution, 9.4 kg of styrene, 6.6 kg of methyl methacrylate, and 10 g of t-dodecylmercaptan. Next, the gas phase was replaced with nitrogen gas. Then, the temperature of the mixture under stirring was increased to 88°C over 40 min. After the temperature had been raised, the temperature was maintained at 88°C while the 25% maleic anhydride solution and the 2% t-butylperoxy-2-ethyl hexanoate solution were each continuously added. The 25% maleic anhydride solution was added such that the rate of addition was changed step-wise at 2.02 kg/h from the start of addition to 4 h, at 0.96 kg/h from 4 h to 7 h, at 0.79 kg/h from 7 h to 11 h, and at 0.14 kg/h from 11 h to 13 h. The total of 14.4 kg was added. The 2% t-butylperoxy-2-ethyl hexanoate solution was added such that the rate of addition was changed step-wise at 0.06 kg/h from the start of addition to 7 h and at 0.1 kg/h from 7 h to 13 h. The total of 1.02 kg was added. The polymerization temperature was kept at 88°C from the start of addition to 7 h, was then increased to 118°C over 6 h at a programming rate of 5°C/h, and was further kept at 118°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (A-7). The resulting copolymer (A-7) was used to determine, like the case of A-1, the composition, molecular weight, haze of the 12% by mass chloroform solution, and total light transmittance of the mirror surface plate with a thickness of 2 mm. Table 1 shows the measured results.

<Production Example of Copolymer (A-8)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 1.8 kg of the 25% maleic anhydride solution, 12 kg of styrene, 3.5 kg of methyl methacrylate, and 10 g of t-dodecylmercaptan. Next, the gas phase was replaced with nitrogen gas. Then, the temperature of the mixture under stirring was increased to 92°C over 40 min. After the temperature had been raised, the temperature was maintained at 92°C while the 25% maleic anhydride solution and the 2% t-butylperoxy-2-ethyl hexanoate solution were each continuously added. The 25% maleic anhydride solution was added such that the rate of addition was changed step-wise at 1.83 kg/h from the start of addition to 4 h, at 1.77 kg/h from 4 h to 7 h, at 0.81 kg/h from 7 h to 10 h, and at 0.38 kg/h from 10 h to 13 h. The total of 16.2 kg was added. The 2% t-butylperoxy-2-ethyl hexanoate solution was added such that the rate of addition was changed step-wise at 0.12 kg/h from the start of addition to 7 h and at 0.19 kg/h from 7 h to 13 h. The total of 1.98 kg was added. The polymerization temperature was kept at 92°C from the start of addition to 7 h, was then increased to 116°C over 6 h at a programming rate of 4°C/h, and was further kept at 116°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (A-8). The resulting copolymer (A-8) was used to determine, like the case of A-1, the composition, molecular weight, haze of the 12% by mass chloroform solution, and total light transmittance of the mirror surface plate with a thickness of 2 mm. Table 1 shows the measured results.

<Production Example of Copolymer (B-1)>

Prepared beforehand were: a 20% maleic anhydride solution in which a maleic anhydride was dissolved at a concentration of 20% by mass into methyl isobutyl ketone; and a 2% t-butylperoxy-2-ethyl hexanoate solution in which t-butylperoxy-2-ethyl hexanoate was diluted at 2% by mass into methyl isobutyl ketone. Those solutions were used for polymerization.

First, to a 120-L autoclave equipped with a mixer were added 2.8 kg of the 20% maleic anhydride solution, 24 kg of styrene, 10.4 kg of methyl methacrylate, and 40 g of t-dodecylmercaptan. Next, the gas phase was replaced with nitrogen gas. Then, the temperature of the mixture under stirring was increased to 88°C over 40 min. After the temperature had been raised, the temperature was maintained at 88°C while the 20% maleic anhydride solution was added at a rate of addition of 2.1 kg/h and the 2% t-butylperoxy-2-ethyl hexanoate solution was added at a rate of addition of 375 g/h and each was continuously added over 8 h. After that, the addition of the 2% t-butylperoxy-2-ethyl hexanoate solution was stopped and 40 g of t-butyl peroxy isopropyl monocarbonate was added. While the rate of addition of the 20% maleic anhydride solution was kept at 2.1 kg/h, the temperature of the solution was increased to 120°C over 4 h at a programming rate of 8°C/h. When the cumulative volume of addition reached 25.2 kg, the addition of the 20% maleic anhydride solution was stopped. After the temperature had been raised, the temperature was kept at 120°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (B-1). The resulting copolymer (B-1) was used to determine, like the case of A-1, the composition, molecular weight, haze of the 12% by mass chloroform solution, and total light transmittance of the mirror surface plate with a thickness of 2 mm. Table 2 shows the measured results.

<Production Example of Copolymer (B-2)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 2.04 kg of the 25% maleic anhydride solution, 12.2 kg of styrene, 1.8 kg of methyl methacrylate, and 10 g of t-dodecylmercaptan. Next, the gas phase was replaced with nitrogen gas. Then, the temperature of the mixture under stirring was increased to 92°C over 40 min. After the temperature had been raised, the temperature was maintained at 92°C while the 25% maleic anhydride solution and the 2% t-butylperoxy-2-ethyl hexanoate solution were each continuously added. The 25% maleic anhydride solution was added such that the rate of addition was changed step-wise at 2.43 kg/h from the start of addition to 4 h, at 1.84 kg/h from 4 h to 7 h, at 0.73 kg/h from 7 h to 10 h, and at 0.31 kg/h from 10 h to 13 h. The total of 18.36 kg was added. The 2% t-butylperoxy-2-ethyl hexanoate solution was added such that the rate of addition was changed step-wise at 0.12 kg/h from the start of addition to 7 h and at 0.19 kg/h from 7 h to 13 h. The total of 1.98 kg was added. The polymerization temperature was kept at 92°C from the start of addition to 7 h, was then increased to 116°C over 6 h at a programming rate of 4°C/h, and was further kept at 116°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (B-2). The resulting copolymer (B-2) was used to determine, like the case of A-1, the composition, molecular weight, haze of the 12% by mass chloroform solution, and total light transmittance of the mirror surface plate with a thickness of 2 mm. Table 2 shows the measured results.

<Production Example of Copolymer (B-3)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 1.6 kg of the 25% maleic anhydride solution, 6.4 kg of styrene, 9.6 kg of methyl methacrylate, and 10 g of t-dodecylmercaptan. Next, the gas phase was replaced with nitrogen gas. Then, the temperature of the mixture under stirring was increased to 86°C over 40 min. After the temperature had been raised, the temperature was maintained at 86°C while the 25% maleic anhydride solution and the 2% t-butylperoxy-2-ethyl hexanoate solution were each continuously added. The 25% maleic anhydride solution was added such that the rate of addition was changed step-wise at 9.36 kg/h from the start of addition to 1 h, at 1.44 kg/h from 1 h to 4 h, and at 0.36 kg/h from 4 h to 6 h. The total of 14.4 kg was added. The 2% t-butylperoxy-2-ethyl hexanoate solution was added such that the rate of addition was changed step-wise at 0.07 kg/h from the start of addition to 3 h and at 0.1 kg/h from 3 h to 6 h. The total of 0.51 kg was added. The polymerization temperature was kept at 86°C from the start of addition to 4 h, was then increased to 118°C over 2 h at a programming rate of 16°C/h, and was further kept at 118°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (B-3). The resulting copolymer (B-3) was used to determine, like the case of A-1, the composition, molecular weight, haze of the 12% by mass chloroform solution, and total light transmittance of the mirror surface plate with a thickness of 2 mm. Table 2 shows the measured results.

<Production Example of Copolymer (B-4)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 1.76 kg of the 25% maleic anhydride solution, 15.6 kg of styrene, and 10 g of t-dodecylmercaptan. Next, the gas phase was replaced with nitrogen gas. Then, the temperature of the mixture under stirring was increased to 100°C over 40 min. After the temperature had been raised, the temperature was maintained at 100°C while the 25% maleic anhydride solution and the 2% t-butylperoxy-2-ethyl hexanoate solution were each continuously added. The 25% maleic anhydride solution was added such that the rate of addition was changed step-wise at 1.45 kg/h from the start of addition to 6 h, at 0.95 kg/h from 6 h to 9 h, at 0.79 kg/h from 9 h to 12 h, and at 0.63 kg/h from 12 h to 15 h. The total of 15.81 kg was added. The 2% t-butylperoxy-2-ethyl hexanoate solution was added such that the rate of addition was changed step-wise at 0.15kg/h from the start of addition to 9 h and at 0.28kg/h from 9 h to 15 h. The total of 3.03kg was added. The polymerization temperature was kept at 100°C from the start of addition to 9 h, was then increased to 118°C over 6 h at a programming rate of 3°C/h, and was further kept at 118°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (B-4). The resulting copolymer (B-4) was used to determine, like the case of A-1, the composition, molecular weight, haze of the 12% by mass chloroform solution, and total light transmittance of the mirror surface plate with a thickness of 2 mm. Table 2 shows the measured results.

<Production Example of Copolymer (B-5)>

The 25% maleic anhydride solution and the 2% t-butylperoxy-2-ethyl hexanoate solution were likewise prepared as in the Production Example of the copolymer (A-1), and were used for polymerization.

First, to a 50-L autoclave equipped with a mixer were added 1.8 kg of the 25% maleic anhydride solution, 12 kg of styrene, 3.5 kg of methyl methacrylate, and 10 g of t-dodecylmercaptan. Next, the gas phase was replaced with nitrogen gas. Then, the temperature of the mixture under stirring was increased to 90°C over 40 min. After the temperature had been raised, the temperature was maintained at 90°C while the 25% maleic anhydride solution and the 2% t-butylperoxy-2-ethyl hexanoate solution were each continuously added. The 25% maleic anhydride solution was added such that the rate of addition was changed step-wise at 1.62 kg/h from the start of addition to 7 h, at 1.08 kg/h from 7 h to 10 h, and at 0.54 kg/h from 10 h to 13 h. The total of 16.2 kg was added. The 2% t-butylperoxy-2-ethyl hexanoate solution was added such that the rate of addition was changed step-wise at 0.12kg/h from the start of addition to 7 h and at 0.19kg/h from 7 h to 13 h. The total of 1.98kg was added. The polymerization temperature was kept at 90°C from the start of addition to 7 h, was then increased to 114°C over 6 h at a programming rate of 4°C/h, and was further kept at 114°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (B-5). The resulting copolymer (B-5) was used to determine, like the case of A-1, the composition, molecular weight, haze of the 12% by mass chloroform solution, and total light transmittance of the mirror surface plate with a thickness of 2 mm. Table 2 shows the measured results.

<Production Example of Copolymer (B-6)>

The 20% maleic anhydride solution and the 2% t-butylperoxy-2-ethyl hexanoate solution were likewise prepared as in the Production Example of the copolymer (A-1), and were used for polymerization.

First, to a 120-L autoclave equipped with a mixer were added 3.8 kg of the 20% maleic anhydride solution, 24 kg of styrene, 8.4 kg of methyl methacrylate, and 32 g of t-dodecylmercaptan. Next, the gas phase was replaced with nitrogen gas. Then, the temperature of the mixture under stirring was increased to 88°C over 40 min. After the temperature had been raised, the temperature was maintained at 88°C while the 20% maleic anhydride solution was added at a rate of addition of 2.85 kg/h and the 2% t-butylperoxy-2-ethyl hexanoate solution was added at a rate of addition of 300 g/h and each was continuously added over 8 h. After that, the addition of the 2% t-butylperoxy-2-ethyl hexanoate solution was stopped and 40 g of t-butyl peroxy isopropyl monocarbonate was added. While the rate of addition of 20% maleic anhydride solution was kept at 2.85 kg/h, the temperature of the solution was increased to 120°C over 4 h at a programming rate of 8°C/h. When the cumulative volume of addition reached 34.2kg, the addition of the 20% maleic anhydride solution was stopped. After the temperature had been raised, the temperature was kept at 120°C for 1 h to complete the polymerization.

The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a copolymer pellet (B-6). The resulting copolymer (B-6) was used to determine, like the case of A-1, the composition, molecular weight, haze of the 12% by mass chloroform solution, and total light transmittance of the mirror surface plate with a thickness of 2 mm. Table 2 shows the measured results.

[Table 1]

**Table** 1

| Results of analyzing copolymers (A-1) to (A-8) | | A-1 | A-2 | A-3 | A-4 | A-5 | A-6 | A-7 | A-8 |
|---|---|---|---|---|---|---|---|---|---|
| Composition Analysis: ST unit | % by mass | 60.1 | 70.8 | 60.2 | 50.2 | 61.1 | 73.4 | 48.5 | 60.3 |
| Composition Analysis: MMA unit | % by mass | 19.8 | 7.5 | 17.2 | 28.8 | 14.8 | 5.1 | 31.1 | 17.2 |
| Composition Analysis: MAH unit | % by mass | 20.1 | 21.7 | 22.6 | 21.0 | 24.1 | 21.5 | 20.4 | 22.5 |
| Weight-average molecular weight (Mw) $\times 10^4$ | g/mol | 16.9 | 17.8 | 17.4 | 15.4 | 17.3 | 17.5 | 18.0 | 17.4 |
| Haze of a 12% by mass chloroform solution of the copolymer | % | 0.3 | 0.4 | 0.6 | 0.4 | 3.6 | 2.2 | 1.7 | 4.9 |

(continued)

| Results of analyzing copolymers (A-1) to (A-8) | | A-1 | A-2 | A-3 | A-4 | A-5 | A-6 | A-7 | A-8 |
|---|---|---|---|---|---|---|---|---|---|
| Total light transmittance of the mirror surface plate with a thickness of 2 mm | % | 91.5 | 91.1 | 91.3 | 91.1 | 90.2 | 89.5 | 89.6 | 90.3 |
| * In the table, the styrene monomer is abbreviated as ST, the methyl methacrylate monomer is abbreviated as MMA, and the maleic anhydride monomer is abbreviated as MAH. | | | | | | | | | |

[Table 2]

Table 2

| Results of analyzing copolymers (B-1) to (B-6) | | B-1 | B-2 | B-3 | B-4 | B-5 | B-6 |
|---|---|---|---|---|---|---|---|
| Composition Analysis: ST unit | % by mass | 60.0 | 61.1 | 36.5 | 77.7 | 60.4 | 60.1 |
| Composition Analysis: MMA unit | % by mass | 25.6 | 8.8 | 42.1 | 0.0 | 17.2 | 20.3 |
| Composition Analysis: MAH unit | % by mass | 14.4 | 30.1 | 21.4 | 22.3 | 22.4 | 19.6 |
| Weight-average molecular weight (Mw) $\times 10^4$ | g/mol | 15.3 | 17.2 | 18.0 | 14.9 | 17.6 | 15.5 |
| Haze of e 12% by mass chloroform solution of the copolymer | % | 0.3 | 98.7 | 2.8 | 18.6 | 23.8 | 8.9 |
| Total light transmittance of the mirror surface plate with a thickness of 2 mm | % | 91.8 | 87.8 | 88.8 | 86.3 | 90.2 | 90.2 |
| * In the table, the styrene monomer is abbreviated as ST, the methyl methacrylate monomer is abbreviated as MMA, and the maleic anhydride monomer is abbreviated as MAH. | | | | | | | |

The following was used as a methacrylic resin.

Product name: SUMIPEX (grade name: MH), manufactured by Sumitomo Chemical Co., Ltd.

<Examples and Comparative Examples>

Each of the copolymers (A-1) to (A-8) or each of the copolymers (B-1) to (B-6) was mixed with a methacrylic resin at a ratio (% by mass) designated in Tables 3 to 4. Then, the mixture was subjected to melt-kneading at 230°C using a twin-screw extruder (TEM-35B, manufactured by TOSHIBA MACHINE CO., LTD.) and was pelleted to give a resin composition.

Each resin composition was evaluated as follows. Tables 3 to 4 show the evaluation results.

(Total Light Transmittance and Haze)

An injection molding machine (IS-50EPN, manufactured by TOSHIBA MACHINE CO., LTD.) was used to perform molding under molding conditions at a cylinder temperature of 230°C and a die temperature of 40°C to give a mirror surface plate with a length of 90 mm, a width of 55 mm, and a thickness of 2 mm. Then, a haze meter (NDH-1001DP model, manufactured by NIPPON DENSHOKU INDUSTRIES Co., LTD.) was used to measure the total light transmittance and the haze of the mirror surface plate in accordance with ASTM D1003.

(Charpy Impact Strength)

Charpy impact strength was measured on the basis of JIS K7111-1: 2006 using a test piece without a notch was used, and the impact was applied in the edgewise direction. Note that as a measurement device, a digital impact testing machine, manufactured by Toyo Seiki Seisaku-Sho, Ltd., was used.

(Pencil Hardness)

An injection molding machine (IS-50EPN, manufactured by TOSHIBA MACHINE CO., LTD.) was used to perform molding under molding conditions at a cylinder temperature of 230°C and a die temperature of 40°C to give a mirror surface plate with a length of 90 mm, a width of 55 mm, and a thickness of 2 mm. Then, a pencil hardness tester (KT-VF2380, manufactured by COTEC, Inc.) was used to measure a pencil hardness in accordance with JIS K 5600-5-4: 1999 (with a load of 750 g and at an angle of 45 degrees).

(Vicat Softening Point)

The test piece with 10 mm × 10 mm and a thickness of 4 mm was used to measure a Vicat softening point on the basis of JIS K7206: 1999 in accordance with the "50" method (using a load of 50 N and a programming rate of 50°C/h). Note that as a measurement device, a HDT & VSPT tester, manufactured by Toyo Seiki Seisaku-Sho, Ltd., was used.

(Thermostability)

An injection molding machine (IS-50EPN, manufactured by TOSHIBA MACHINE CO., LTD.) was used to perform molding under molding conditions at a cylinder temperature of 250°C and a die temperature of 60°C to produce 50 samples of a cylindrical molded product with a diameter of 30 mm and a height of 50 mm. The samples were visually inspected to count the number of samples in which poor appearances due to thermal decomposition (e.g., silver streaks, gas burning, coloring, and foaming) had occurred. The thermostability of each resin composition was evaluated. The criteria are summarized as follows.

A: the number of samples with poor appearance was 0.
B: the number of samples with poor appearance was from 1 to 2.
C: the number of samples with poor appearance was from 3 to 5.
D: the number of samples with poor appearance was 6 or more.

[Table 3]

| Table 3 | | | Example | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Resin composition | Copolymer | A-1 | 40 | | | | | | | | | | | | |
| | | A-2 | | 37 | | | | | | | | | | | |
| | | A-3 | | | 5 | 15 | 25 | 35 | 45 | 50 | | | | | |
| | | A-4 | | | | | | | | | 38 | | | | |
| | | A-5 | | | | | | | | | | 33 | | | |
| | | A-6 | | | | | | | | | | | 37 | | |
| | | A-7 | | | | | | | | | | | | 40 | |
| | | A-8 | | | | | | | | | | | | | 35 |
| | Methacrylic resin | | 60 | 63 | 95 | 85 | 75 | 65 | 55 | 50 | 62 | 67 | 63 | 60 | 65 |
| Evaluation | Total light transmittance (%) | | 91.7 | 91.5 | 92.2 | 92.1 | 92.0 | 91.7 | 91.2 | 91.2 | 91.9 | 89.3 | 90.1 | 89.6 | 89.0 |
| | Haze (%) | | 0.3 | 0.3 | 0.2 | 0.2 | 0.3 | 0.4 | 0.4 | 0.5 | 0.3 | 1.9 | 1.1 | 1.5 | 4.6 |
| | Charpy impact strength [no notch] (kJ/m$^2$) | | 20.2 | 19.7 | 22.3 | 21.8 | 21.3 | 20.5 | 18.6 | 16.3 | 20.8 | 20.3 | 18.4 | 21.2 | 17.3 |
| | Pencil hardness | | 2H | 2H | 2H | 2H | 2H | 2H | 2H | H | 2H | 2H | 2H | 2H | 2H |
| | Vicat softening point (°C) | | 120 | 120 | 110 | 114 | 117 | 120 | 124 | 127 | 120 | 120 | 120 | 120 | 120 |
| | Thermostability | | A | A | A | A | A | A | A | B | A | B | B | B | C |

[Table 4]

| Table 4 | | | Comparative Example | | | | | | | | | |
|---|---|---|---|---|---|---|---|---|---|---|---|---|
| | | | 1 | 2 | 3 | 4 | 5 | 6 | 7 | 8 | 9 |
| Resin composition | Copolymer | B-1 | 25 | 50 | 75 | | | | | | |
| | | B-2 | | | | 30 | | | | | |
| | | B-3 | | | | | 37 | | | | |
| | | B-4 | | | | | | 35 | | | |
| | | B-5 | | | | | | | 35 | | |
| | | B-6 | | | | | | | | | 40 |
| | Methacrylic resin | | 75 | 50 | 25 | 70 | 63 | 65 | 65 | 100 | 60 |
| Evaluation | Total light transmittance (%) | | 90.8 | 90.4 | 89.5 | 78.3 | 88.6 | 86.5 | 84.9 | 92.4 | 88.3 |
| | Haze (%) | | 0.4 | 0.6 | 0.9 | 75.5 | 5.1 | 12.6 | 32.8 | 0.2 | 1.9 |
| | Charpy impact strength [no notch] (kJ/m$^2$) | | 17.1 | 15.6 | 13.8 | 8.1 | 17.6 | 11.6 | 13.6 | 22.3 | 12.2 |
| | Pencil hardness | | 2H | H | F | H | 2H | H | H | 2H | H |
| | Vicat softening point (°C) | | 115 | 120 | 124 | 120 | 119 | 118 | 119 | 108 | 119 |
| | Thermostability | | A | B | C | D | D | B | D | A | D |

The Examples, which involved the resin compositions produced by combining each of the copolymers (A-1) to (A-8) of the present invention with a methacrylic resin, had excellent transparency, impact strength, heat resistance, and thermostability.

When Example 5 is compared with Comparative Example 1 and Example 8 is compared with Comparative Example 2, the following is found. In the experimental examples in which the blending ratio with respect to the methacrylic resin is the same, the copolymer (A-3) of the present invention had a better heat resistance improvement effect with respect to the methacrylic resin than the copolymer (B-1) in which the content of the unsaturated dicarboxylic anhydride monomer unit did not satisfy the range of the present invention.

When Examples 1, 2, 6, and 9 to 13 are compared with Comparative Example 2, the following is found. In the experimental examples in which the heat resistance of each of the resin compositions is the same, the blending ratio of each of the copolymers (A-1) to (A-8) of the present invention to a methacrylic resin was smaller than that of the copolymer (B-1) in which the content of the unsaturated dicarboxylic anhydride monomer unit did not satisfy the range of the present invention. The resulting resin compositions had excellent impact strength and surface hardness. When Example 7 and

16

Comparative Example 3 are compared, the same can be said.

The transparency, impact strength, and thermostability were poor in Comparative Example 4 involving the resin composition produced by combining a methacrylic resin with the copolymer (B-2) in which the content of the unsaturated dicarboxylic anhydride monomer unit exceeded the range of the present invention.

The transparency and thermostability were poor in Comparative Example 5 involving the resin composition produced by combining a methacrylic resin with the copolymer (B-3) in which the content of the aromatic vinyl monomer unit did not satisfy the range of the present invention and the content of the (meth)acrylic acid ester monomer unit exceeded the range of the present invention.

The transparency and impact strength were poor in Comparative Example 6 involving the resin composition produced by combining a methacrylic resin with the copolymer (B-4) in which the content of the aromatic vinyl monomer unit exceeded the range of the present invention and the content of the (meth)acrylic acid ester monomer unit did not satisfy the range of the present invention.

The transparency, impact strength, and thermostability were poor in Comparative Example 7 involving the resin composition produced by combining a methacrylic resin with the copolymer (B-5) in which the haze measured along an optical path length of 10 mm through a 12% by mass chloroform solution of the copolymer in accordance with JIS K-7136 exceeded the range of the present invention.

The impact strength and thermostability were poor in Comparative Example 9 involving the resin composition produced by combining a methacrylic resin with the copolymer (B-6) in which the content of the unsaturated dicarboxylic anhydride monomer unit did not satisfy the range of the present invention.

-Evaluating Compatibility with Polarizer Protective Film-

A pellet used in each of Examples 6 and 7 and Comparative Example 2 was dried at 90°C for 2 h. Next, the pellet was extruded at 260°C using a 40 mm-Φ single screw extruder and a T die with a width of 300 mm to give a sheet-like molten resin. This resin was subjected to pressure bonding using a flexible roll and then to cooling using a cooling roll to give a film with a width of 250 mm and a thickness of $100 \pm 5$ μm. Each film was evaluated as follows. Table 5 shows the evaluation results.

(Glass-transition Temperature)

The device below and each film were used to measure a glass-transition temperature.

Device: Robot DSC6200, manufactured by Seiko Instruments Inc.
Programming Rate: 10°C/min

Note that a film with a glass-transition temperature of 120°C or more is suitable for a polarizer protective film.

(Film Strength)

Regarding the film strength, a test piece was cut out from the film and a falling ball impact test was conducted to measure 50% fracture energy.

Test piece: an unstretched film with a length of 50 mm $\times$ width of 50mm $\times$ film thickness of $100 \pm 5$ μm.
Weight: an iron ball with a diameter of 11 mm and a weight of 5.45 g.
Immobilisation: a film was sandwiched between rings with an inner diameter of 43 mm and immobilized at 4 sites (upper, lower, left, and right sides) using clips.

Each 50% fracture height was measured, with a 1-cm interval, in accordance with JIS K7211 to calculate 50% fracture energy. Note that the greater the 50% fracture energy, the more suitable for a polarizer protective film.

(Measuring Phase Difference)

Regarding the in-plane phase difference Re and the thickness-wise phase difference Rth, the device below and each film were used to determine the phase differences.

Device: a birefringence measurement device "KOBRA-WR, manufactured by Oji Scientific Instruments".
Measurement Wavelength: 590 nm.

Note that as the in-plane phase difference Re and the thickness-wise phase difference Rth become closer to 0, this is more suitable for a polarizer protective film.

[Table 5]

| Table 5 | | | Example | | Reference Example |
|---|---|---|---|---|---|
| | | | 14 | 15 | 1 |
| Resin composition | Copolymer | A-3 | 35 | 45 | |
| | | B-1 | | | 50 |
| | Methacrylic resin | | 65 | 55 | 50 |
| Evaluation | Glass-transition temperature (°C) | | 120 | 124 | 120 |
| | Film strength (mJ) | | 15 | 13 | 11 |
| | In-plane phase difference Re (nm) | | 2.8 | 3.8 | 4.1 |
| | Thickness-wise phase difference Rth (nm) | | -1.4 | -1.9 | -2.0 |

The heat resistance and the film strength were excellent in Examples 14 and 15 involving the resin composition produced by combining a methacrylic resin with the copolymer (A-3) of the present invention. The resulting film was suitable for a polarizer protective film in which the in-plane phase difference Re and the thickness-wise phase difference Rth were small and there was little birefringence.

The heat resistance and the film strength were good in Reference Example 1 involving the resin composition produced by combining a methacrylic resin with the copolymer (B-1) in which the content of the unsaturated dicarboxylic anhydride monomer unit did not satisfy the range of the present invention. The resulting film had a small in-plane phase difference Re and thickness-wise phase difference Rth and little birefringence. Because of this, the film seems to be usable for a polarizer protective film. However, the heat resistance and the film strength were better in the resin composition produced by combining a methacrylic resin with the copolymer (A-3) of the present invention and is more suitable for a polarizer protective film.

-Evaluating Compatibility with Transparent, Scratch-resistant Plate-

The pellet used in each of Example 7 and Comparative Example 2 and a polycarbonate resin were subjected to melt co-extrusion by a feed block method using a single screw extruder (SE-65CA, manufactured by TOSHIBA MACHINE CO., LTD.) (using a T die with a width of 500 mm) at a cylinder temperature (on the resin composition side) of 260°C and at a cylinder temperature (on the polycarbonate resin side) of 270°C. Then, a two-layered laminated sheet having a thickness of 1.0 mm ± 0.01 mm was manufactured. At this time, a layer ratio (i.e., a ratio of the thickness of one layer to the other) of the resin composition layer (I) to the polycarbonate resin layer (II) was adjusted to (I)/(II) = 10/90. Each laminate sheet was evaluated as follows. Table 6 shows the evaluation results. Note that as the polycarbonate resin, the "Panlite L-1250" (MFR: 8 g/10 min; the glass-transition temperature: 150°C), manufactured by TEIJIN LIMITED, was used.

(Amount of Warping)

Each laminated sheet was cut into squares with a length of 90 mm and a breadth of 90 mm. Each square was allowed to lie for 72 h in environment testing equipment (PL-3KPH, manufactured by ESPEC CORP.) under conditions at a temperature of 85°C and a humidity of 85%. Next, each post-testing laminated sheet was layered on top of a flat glass substrate so that the convex side of the sheet faces downward. A gap between each of 4 vertexes of the laminated sheet and a plane of the glass substrate and a gap between each middle point (i.e., a position where each side is cut to a half) of 4 sides of the laminated sheet and the plane of the glass substrate were measured (the total of 8 sites was measured). The measured values were averaged to give an amount of warping. Note that the smaller the amount of warping, the more suitable for a transparent, scratch-resistant plate.

(Total Light Transmittance)

Each laminated sheet was cut into squares with a length of 90 mm and a breadth of 90 mm. Then, a haze meter (NDH-1001DP model, manufactured by NIPPON DENSHOKU INDUSTRIES Co., LTD.) was used to measure the total light transmittance in accordance with ASTM D1003 such that light came in from the polycarbonate resin layer (II). Note that the higher the total light transmittance, the more suitable for a transparent, scratch-resistant plate.

(Pencil Hardness)

Each laminated sheet was cut into squares with a length of 90 mm and a breadth of 90 mm. Each laminated sheet was allowed to lie such that the resin composition layer (I) was an upper layer and the resin composition layer (II) was a lower layer. Then, a pencil hardness tester (KT-VF2380, manufactured by COTEC, Inc.), was used to measure a pencil hardness in accordance with JIS K 5600-5-4: 1999 (with a load of 750 g and at an angle of 45 degrees). Note that the higher the pencil hardness, the more suitable for a transparent, scratch-resistant plate.

[Table 6]

| Table 6 | | | Example | Reference Example |
|---|---|---|---|---|
| | | | 16 | 2 |
| Resin composition | Copolymer | A-3 | 45 | |
| | | B-1 | | 50 |
| | Methacrylic resin | | 55 | 50 |
| Laminated sheet | Resin composition | Layer I | 10 | 10 |
| | Polycarbonate resin | Layer II | 90 | 90 |
| Evaluation | Amount of warping | | 0.30 | 0.49 |
| | Total light transmittance (%) | | 90.4 | 90.3 |
| | Pencil hardness | | 2H | H |

The amount of warping, total light transmittance, and pencil hardness were excellent in Example 16 involving the resin composition produced by combining a methacrylic resin with the copolymer (A-3) of the present invention. Then, the resulting laminated sheet was suitable for a transparent, scratch-resistant plate.
The amount of warping, total light transmittance, and pencil hardness were good in Reference Example 2 involving the resin composition produced by combining a methacrylic resin with the copolymer (B-1) in which the content of the unsaturated dicarboxylic anhydride monomer unit did not satisfy the range of the present invention. Thus, Reference Example 2 seems to be usable for a transparent, scratch-resistant plate. However, the amount of warping and the pencil hardness are better in the laminated sheet using the resin composition produced by combining a methacrylic resin with the copolymer (A-3) of the present invention and thus is more suitable for a transparent, scratch-resistant plate.

**Industrial Applicability**

The present invention can provide a copolymer that has a heat resistance improvement effect, with respect to a methacrylic resin, superior to that of the prior art, while not deteriorating compatibility with the methacrylic resin.
Further, the resin compositions produced by combining a methacrylic resin with each of the copolymers of the present invention have excellent transparency, impact strength, surface hardness, heat resistance, and thermostability. Accordingly, the resin compositions can be used for a wide range of applications regarding various molded bodies (e.g., housings for home appliances, optical components, optical films such as a polarizer protective film, sheets for transparent, scratch-resistant plates).

**Claims**

1. A copolymer comprising 45 to 75% by mass of an aromatic vinyl monomer unit, 5 to 35% by mass of a (meth)acrylic acid ester monomer unit, and 20 to 25% by mass of an unsaturated dicarboxylic anhydride monomer unit, wherein a haze measured along an optical path length of 10 mm through a 12% by mass chloroform solution of the copolymer in accordance with JIS K-7136 is 5% or less.

2. The copolymer according to claim 1, wherein the haze measured along an optical path length of 10 mm through a 12% by mass chloroform solution of the copolymer is 2% or less.

3. The copolymer according to claim 1 or 2, wherein a weight-average molecular weight (Mw) is 100,000 to 200,000.

4. A resin composition comprising the copolymer according to any one of claims 1 to 3 and a methacrylic resin.

5. The resin composition according to claim 4, comprising 5 to 50% by mass of the copolymer and 50 to 95% by mass of the methacrylic resin.

6. A molded body comprising the resin composition according to claim 4 or 5.

7. The molded body according to claim 6, wherein the molded body is a film.

8. The film according to claim 7, wherein the film is used for a polarizer protective film.

9. The molded body according to claim 6, wherein the molded body is a sheet.

10. The sheet according to claim 9, wherein the sheet is used for a transparent, scratch-resistant plate.

11. A transparent, scratch-resistant plate comprising a sheet, wherein the sheet is a laminated sheet of the resin composition according to claim 4 or 5 and a polycarbonate resin.

**Patentansprüche**

1. Copolymer, umfassend 45 bis 75 Masse-% einer aromatischen Vinyl-Monomereinheit, 5 bis 35 Masse-% einer (Meth)acrylsäureester-Monomereinheit und 20 bis 25 Masse-% einer ungesättigten Dicarbonsäureanhydrid-Monomereinheit, wobei eine Trübung, gemessen entlang einer optischen Weglänge von 10 mm durch eine Chloroformlösung mit 12 Masse-% des Copolymers gemäß JIS K 7136, 5 % oder weniger beträgt.

2. Copolymer nach Anspruch 1, wobei die Trübung, gemessen entlang einer optischen Weglänge von 10 mm durch eine Chloroformlösung mit 12 Masse-% des Copolymers, 2 % oder weniger beträgt.

3. Copolymer nach Anspruch 1 oder 2, wobei ein Gewichtsmittel des Molekulargewichts (Mw) 100 000 bis 200 000 beträgt.

4. Harzzusammensetzung, umfassend das Copolymer nach einem der Ansprüche 1 bis 3 und ein Methacrylatharz.

5. Harzzusammensetzung nach Anspruch 4, umfassend 5 bis 50 Masse-% des Copolymers und 50 bis 95 Masse-% des Methacrylatharzes.

6. Formkörper, umfassend die Harzzusammensetzung nach Anspruch 4 oder 5.

7. Formkörper nach Anspruch 6, wobei der Formkörper eine Folie ist.

8. Folie nach Anspruch 7, wobei die Folie für eine Polarisator-Schutzfolie verwendet wird.

9. Formkörper nach Anspruch 6, wobei der Formkörper eine Schicht ist.

10. Schicht nach Anspruch 9, wobei die Schicht für eine transparente, kratzfeste Platte verwendet wird.

11. Transparente, kratzfeste Platte, umfassend eine Schicht, wobei die Schicht eine laminierte Schicht der Harzzusammensetzung nach Anspruch 4 oder 5 und eines Polycarbonatharzes ist.

**Revendications**

1. Copolymère comprenant de 45 à 75 % massique d'une unité monomère vinylique aromatique, de 5 à 35 % massique d'une unité monomère d'ester d'acide (méth)acrylique, et de 20 à 25 % massique d'une unité monomère anhydride dicarboxylique insaturé, un voile mesuré le long d'une longueur de chemin optique de 10 mm à travers une solution de chloroforme à 12 % massique du copolymère conformément à JIS K-7136 est de 5 % ou moins.

2. Copolymère selon la revendication 1, le voile mesuré le long d'une longueur de chemin optique de 10 mm à travers une solution de chloroforme à 12 % massique du copolymère est de 2 % ou moins.

3. Copolymère selon la revendication 1 ou 2, une masse moléculaire moyenne en poids (Mw) étant de 100 000 à 200 000.

4. Composition de résine comprenant le copolymère selon l'une quelconque des revendications 1 à 3 et une résine méthacrylique.

5. Composition de résine selon la revendication 4, comprenant de 5 à 50 % massique du copolymère et de 50 à 95 % massique de la résine méthacrylique.

6. Corps moulé comprenant la composition de résine selon la revendication 4 ou 5.

7. Corps moulé selon la revendication 6, le corps moulé étant un film.

8. Film selon la revendication 7, le film étant utilisé pour un film de protection polarisant.

9. Corps moulé selon la revendication 6, le corps moulé étant une feuille.

10. Feuille selon la revendication 9, la feuille étant utilisée pour une plaque transparente résistante aux rayures.

11. Plaque transparente résistante aux rayures comprenant une feuille, la feuille étant une feuille stratifiée de la composition de résine selon la revendication 4 ou 5 et d'une résine polycarbonate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S57153008 A
- WO 2009031544 A1
- WO 2014021264 A1
- EP 2881407 A1
- EP 2881770 A1
- EP 2910580 A1